# EUROPÄISCHE PATENTSCHRIFT

(11) **EP 0 788 455 B1**
(45) Veröffentlichungstag und Bekanntmachung des Hinweises auf die Patenterteilung: **12.04.2000**
(21) Anmeldenummer: 95934598.4
(22) Anmeldetag: 13.10.1995
(51) Int. Cl.: B66C 13/06, G01B 11/26

(54) **ANORDNUNG ZUM MESSTECHNISCHEN ERFASSEN VON LASTPENDELUNGEN BEI KRANEN**
ARRANGEMENT FOR SENSING AND MEASURING LOAD OSCILLATION IN CRANES
AGENCEMENT DE DETECTION ET DE MESURE DES OSCILLATIONS DE LA CHARGE DANS DES GRUES

(30) Priorität: 26.10.1994 DE 4438301
(43) Veröffentlichungstag der Anmeldung: 13.08.1997
(73) Patentinhaber: SIEMENS AKTIENGESELLSCHAFT, 80333 München (DE)
(72) Erfinder: WICHNER, Wolfgang, D-90530 Wendelstein (DE)
(86) Internationale Anmeldenummer: DE9501422
(87) Internationale Veröffentlichungsnummer: WO9613455

(56) Entgegenhaltungen:
- EP-A- 0 467 783
- EP-A- 0 554 920
- EP-A- 0 596 330
- US-A- 4 341 472
- Proceedings of the iecon 93. Hawaii, nov.15-19, 1993 Application of fuzzy control to automatic crane operation.

## Beschreibung

Die Erfindung bezieht sich auf eine Anordnung zum meßtechnischen Erfassen von Lastpendelungen bei Kranen gemäß Oberbegriff des Anspruchs 1.

Krane, beispielsweise in Hüttenwerken, der Fertigungsindustrie und Umschlaganlagen, dort z. B. Containerkrane, dienen dazu, Lasten an einer vorgegebenen Stelle aufzunehmen, sie über eine bekannte Strecke zu befördern und an einer festgelegten Stelle abzusetzen. Bei der Automatisierung dieser Vorgänge tritt das Problem auf, daß die Last durch das notwendige Anfahren und Abbremsen zu unerwünschten Pendelbewegungen angestoßen wird, die wegen der geringen Eigendämpfung des Systems nur langsam abklingen und damit das Aufnehmen und Absenken der Last erheblich erschweren und verzögern. Da die Förderleistung in starkem Maße davon bestimmt wird, wie schnell ein Aufnahme-Absetz-Vorgang durchgeführt werden kann, muß man im Interesse einer hohen Förderleistung versuchen, diese Bewegungen durch regelungstechnische Maßnahmen kontrolliert erfolgen zu lassen, auf ein tragbares Maß zu reduzieren oder sogar auszunutzen. Da die Pendelbewegung der Last nicht völlig exakt, beispielsweise durch Rechnersimulation, vorausberechnet werden kann, ist es für die Ausregelung der Lastpendelungen sowie für die Lastpositionierregelung erforderlich, die tatsächliche Pendelbewegung als Istwert zu erfassen.

Es existieren mechanische Verfahren, bei welchen die pendelnden Seile, an denen die Last hängt, Bügel verschieben, welche unterhalb der Seilumlenkung bzw. der Seiltrommel angeordnet sind. Mit einem solchen Mechanismus kann der momentane Pendelwinkel bzw. dessen Änderungsgeschwindigkeit für eine Ausregelung der Lastpendelung mit ausreichender Genauigkeit erfaßt werden. Für Lastpositionierregelungen reicht jedoch die Genauigkeit nicht aus. Darüber hinaus ist das bekannte System mechanisch empfindlich und erfordert einen hohen Wartungsaufwand.

Es ist ferner bekannt, im Bereich der Last, beispielsweise an dem Lastaufnahmerahmen, eine reflektierende Markierung anzubringen, und deren von der Lastpendelung abhängige Position mittels einer Zeilenkamera im Bereich der Seilaufhängung zu beobachten.

Aus der Literaturveröffentlichung PROCEEDINGS OF THE IECON 93, Hawaii, November 15 bis 19 (1993), "Application of Fuzzy Control to automatic crane operation" ist eine gattungsgemäße Anordnung zum meßtechnischen Erfassen von Lastpendelungen bei Kranen bekannt, bei der mit einem Projektor und zugehöriger Kamera das Schwingen eines Meßteils erfaßt und somit der Pendelwinkel bestimmt wird. Eine daraus abgeleitete Geschwindigkeit wird anschließend als Meßgröße in ein Bewegungsmodell für einen Fuzzy-Controller eingegeben, mit dem auch die Lastpendelungen ausgeregelt werden.

Daneben ist aus der EP 0 554 920 A2 eine optische Meßanordnung mit jeweils zwei Sensoren und jeweils zwei Dioden bekannt, mit denen ein Objekt von zwei Seiten vermessen werden kann.

Aufgabe der Erfindung ist es demgegenüber, die Erfassung von Lastpendelungen bei Kranen mit hoher Genauigkeit zu ermöglichen, wobei sich die dazu erforderlichen Mittel durch einen einfachen Aufbau, hohe Zuverlässigkeit und minimalen Wartungsbedarf auszeichnen.

Diese Aufgabe wird erfindungsgemäß mit den kennzeichnenden Merkmalen des Anspruchs 1 gelöst. Bei der Erfindung werden nur einfache Mittel zur Erfassung des Pendelwinkels benötigt, wobei vorteilhafterweise der jeweils horizontale Schattenwurf des Kranseils ausgewertet wird. Damit ergeben sich in vorzugsweiser Weiterbildung auch Möglichkeiten, mit jeweils zwei Zeilenkameras zu messen.

Weitere Einzelheiten und Vorteile ergeben sich aus der nachfolgenden Beschreibung von Ausführungsbeispielen in Verbindung mit den Unteransprüchen. Im einzelnen zeigen
- FIG 1: einen Containerkran mit einer an Kranseilen hängenden Last,
- FIG 2: eine Draufsicht und
- FIG 3: eine Seitenansicht eines Ausführungsbeispiels der erfindungsgemäßen Anordnung sowie
- FIG 4: eine erste Variante und
- FIG 5: eine zweite Variante des Ausführungsbeispiels nach FIG 2 mit jeweils zwei Zeilenkameras.

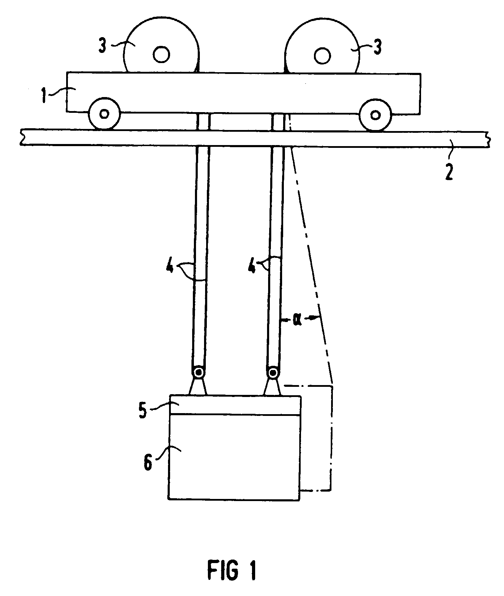

FIG 1 zeigt schematisch eine Laufkatze 1, die entlang eines hier nur abschnittsweise dargestellten Auslegers 2 eines Containerkrans verfahrbar ist. Auf der Katze 2 sind Hubwinden 3 angeordnet, an denen über Seile 4 ein Lastaufnahmerahmen (Spreader) 5 für eine zu transportierende Last 6, hier ein Container, hängt. Durch das Anfahren und Abbremsen der Laufkatze 1 aber auch durch äußere Störeinflüsse, wie z. B. Windkräfte, kann die Last 6 in eine Pendelbewegung versetzt werden, wie dies durch die gestrichelt dargestellte Auslenkung der Last 6 um einen Pendelwinkel α verdeutlicht ist.

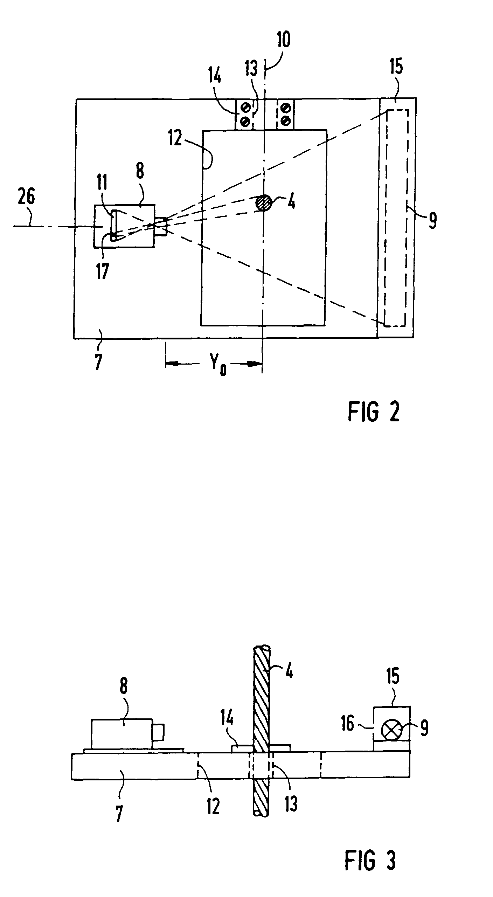

Um den Pendelwinkel α messen zu können, sind, wie die Figuren 2 und 3 zeigen, auf einer Grundplatte 7 eine Zeilenkamera 8 und eine langgestreckte Lichtquelle 9, hier eine Leuchtstoffröhre, beiderseits der Pendelebene 10 eines der Kranseile 4 angeordnet, wobei die Bildsensorzeile 11 der Zeilenkamera 8 und die Lichtquelle 9 horizontal und parallel zur Pendelebene 10 ausgerichtet sind. Die Grundplatte 7 enthält im Bereich zwischen der Zeilenkamera 8 und der Lichtquelle 9 eine Aussparung 12, in der sich das Seil 4 bewegen kann. Um das Seil 4 in die Aussparung 12 einführen zu können, enthält die Grundplatte 7 eine seitliche Öffnung 13, die nach dem Einführen des Seiles 4 mit einem Riegel 14 verschlossen wird, um ein Herausgleiten des Seiles 4 zu vermeiden. Die Lichtquelle 9 ist zum Schutz vor Verschmutzung und Beschädigung von einer Abschirmung 15 umgeben, die auf der Seite der Zeilenkamera 8 einen langgestreckten Lichtaustrittsschlitz 16 enthält.

Das zwischen der Zeilenkamera 8 und der Lichtquelle 9 verlaufende Kranseil 4 verdunkelt aus der Sicht der Kamera 8 einen Teil der Lichtquelle 9, der als dunkler Fleck 17 auf der Bildsensorzeile 11 abgebildet wird. Der Abstand der Flecks 17 von der optischen Mitte 26 ergibt bei bekanntem Abstand y₀ zwischen der Zeilenkamera 8 und der Pendelebene 10 und bekanntem vertikalen Abstand zwischen der Zeilenkamera 8 und der Seilaufhängung an der Katze 1 den Pendelwinkel α.

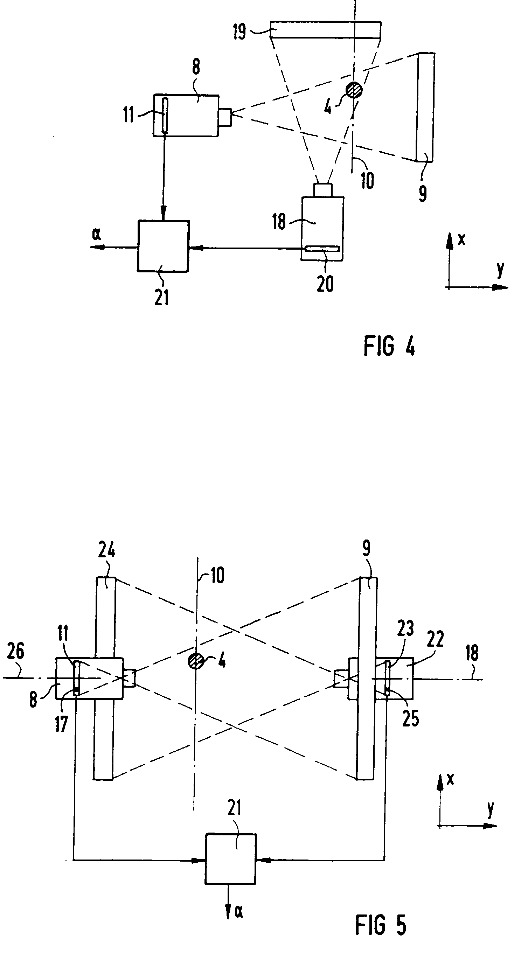

Wenn der Abstand y₀ zwischen der Zeilenkamera 8 und der Pendelebene 10 nicht genau bekannt ist oder sich durch Pendelbewegungen des Seils 4 quer zur Pendelebene 10 ändern kann, ist es erforderlich, den Einfluß des Abstandes y₀ auf die Messung des Pendelwinkels α zu kompensieren. Hierzu ist, wie FIG 4 zeigt, beiderseits des Seiles 4 eine weitere Zeilenkamera 18 mit einer weiteren Lichtquelle 19 angeordnet, wobei die Bildsensorzeile 20 der weiteren Zeilenkamera 18 und die Lichtquelle 19 horizontal und quer zur Pendelebene 10 ausgerichtet sind. Auf diese Weise kann zusätzlich zur Pendelauslenkung des Seils 4 in x-Richtung auch die Auslenkung des Seils 4 in y-Richtung erfaßt werden, so daß in der beiden Kameras 8 und 18 nachgeordneten Auswerteeinrichtung 21 sowohl der Pendelwinkel α in x-Richtung als auch der Pendelwinkel der Last 6 in y-Richtung genau bestimmt werden können.

Bei dem in FIG 5 gezeigten Ausführungsbeispiel ist auf der Seite der Lichtquelle 9 eine zweite Zeilenkamera 22 mit horizontaler Bildsensorzeile 23 und auf der Seite der Zeilenkamera 8 eine zweite horizontal ausgerichtete langgestreckte Lichtquelle 24 angeordnet. Wenn sich bei konstantem Pendelwinkel α, d. h. bei konstanter Auslenkung des Seils 4 in x-Richtung der Abstand des Seiles 4 zur Zeilenkamera 8 in y-Richtung verringert, vergrößert sich dadurch der Abstand des Flecks 17 auf der Bildsensorzeile 11 von der optischen Mitte 26 in dem Maße, wie sich der Abstand des entsprechenden Flecks 25 auf der Bildsensorzeile 23 der zweiten Kamera 22 zur optischen Mitte 26 verringert. Auf diese Weise kann der Einfluß der Seilbewegung in y-Richtung auf die Erfassung des Pendelwinkels α kompensiert werden, wobei zusätzlich auch der Pendelwinkel der Last 6 in y-Richtung erfaßt wird.

## Patentansprüche

1. Anordnung zum meßtechnischen Erfassen von Lastpendelungen bei Kranen mit einer Lichtquelle (9) und einer Kamera (8), die beiderseits einer Pendelebene (10) eines Kranseils (4) angeordnet sind, und mit einer Auswerteeinrichtung (21), die in Abhängigkeit eines vertikalen Abstandes zwischen der Kamera (8) und der Seilaufhängung und einem Signal der Kamera (8) einen momentanen Pendelwinkel (α) ermittelt,
**dadurch gekennzeichnet,** daß die Lichtquelle (9) langgestreckt ausgebildet ist, daß die Kamera eine Bildsensorzeile (11) aufweist, und daß diese Bildsensorzeile (11) und die langgestreckte Lichtquelle (9) horizontal und parallel zur Pendelebene (10) ausgerichtet sind.

2. Anordnung nach Anspruch 1,
**dadurch gekennzeichnet,**
daß beiderseits des Kranseils (4) im wesentlichen senkrecht zu seiner Pendelebene (10) eine zweite Zeilenkamera (18) mit horizontaler Bildsensorzeile (20) und eine zweite langgestreckte Lichtquelle (19) horizontal angeordnet sind und daß das Ausgangssignal der zweiten Zeilenkamera (18) der Auswerteeinrichtung (21) zur Erfassung des Abstandes (yo) der Pendelebene (10) des Kranseils (4) zu der ersten Zeilenkamera (8) und zur Korrektur des ermittelten Pendelwinkels (α) zugeführt ist.

3. Anordnung nach Anspruch 1,
**dadurch gekennzeichnet,**
daß auf der Seite der Lichtquelle (9) eine zweite Zeilenkamera (22) mit horizontaler Bildsensorzeile (23) und auf der Seite der ersten Zeilenkamera (8) eine zweite horizontal ausgerichtete, langgestreckte Lichtquelle (24) angeordnet ist und daß die Ausgangssignale beider Zeilenkameras (8, 22) der Auswerteeinrichtung (21) zur gegenseitigen Kompensation des Einflusses des Abstandes der Pendelebene (10) zu den beiden Zeilenkameras (8, 22) auf das Ergebnis der Pendelwinkelmessung zugeführt wird.

4. Anordnung nach Anspruch 2 oder Anspruch 3,
**dadurch gekennzeichnet,**
daß die Auswerteeinrichtung (21) zur Ermittlung von Lastpendelungen quer zur Pendelebene (10) aufgrund des Signals der zweiten Zeilenkamera (18, 22) ausgebildet ist.

5. Anordnung nach einem der vorangehenden Ansprüche,
**dadurch gekennzeichnet,**
daß die Zeilenkamera (8; 18, 22) und die Lichtquelle (9; 19, 24) auf einer gemeinsamen Grundplatte (7) angeordnet sind, die im Bereich zwischen der Zeilenkamera (8; 18, 22) und der Lichtquelle (9; 19, 24) eine Aussparung (12) zur Aufnahme des Kranseils (4) enthält.

6. Anordnung nach einem der vorangehenden Ansprüche,
**dadurch gekennzeichnet,**
daß die Lichtquelle (9; 19, 24) aus einer Leuchtstoffröhre besteht.

7. Anordnung nach einem der vorangehenden Ansprüche,
**dadurch gekennzeichnet,**
daß die Lichtquelle (9; 19, 24) bis auf einen langgestreckten Lichtaustrittsschlitz (16) allseitig abgeschirmt ist.

## Claims

1. Arrangement for metrological detection of load oscillations in cranes, having a light source (9) and a camera (8) which are arranged on either side of an oscillation plane (10) of a crane cable (4), and having an evaluating device (21) which, as a function of a vertical distance between the camera (8) and the cable suspension device and a signal of the camera (8), establishes an instantaneous swing angle (α),
characterised in that the light source (9) is constructed in a manner such that it is elongated, in that the camera has an image sensor line (11), and in that this image sensor line (11) and the elongated light source (9) are oriented horizontally and parallel to the oscillation plane (10).

2. Arrangement according to claim 1,
characterised in that arranged horizontally on either side of the crane cable (4), substantially at right angles to the oscillation plane (10) thereof, are a second line camera (18) having a horizontal image sensor line (20), and a second elongated light source (19), and in that the output signal of the second line camera (18) is supplied to the evaluating device (21) in order to detect the distance (y₀) of the oscillation plane (10) of the crane cable (4) from the first line camera (8) and in order to correct the swing angle (α) which has been established.

3. Arrangement according to claim 1,
characterised in that arranged on the light source (9) side is a second line camera (22) having a horizontal image sensor line (23), and arranged on the first line camera (8) side is a second horizontally oriented, elongated light source (24), and in that the output signals of both line cameras (8, 22) are supplied to the evaluating device (21) for mutual compensation of the influence of the distance of the oscillation plane (10) from the two line cameras (8, 22) on the result of the swing-angle measurement.

4. Arrangement according to claim 2 or claim 3, characterised in that the evaluating device (21) is constructed for establishing load oscillations at right angles to the oscillation plane (10) on the basis of the signal of the second line camera (18, 22).

5. Arrangement according to one of the preceding claims, characterised in that the line camera (8; 18, 22) and the light source (9; 19, 24) are arranged on a common base plate (7), which contains in the region between the line camera (8; 18, 22) and the light source (9; 19, 24) a recess (12) for receiving the crane cable (4).

6. Arrangement according to one of the preceding claims, characterised in that the light source (9; 19, 24) comprises a fluorescent tube.

7. Arrangement according to one of the preceding claims, characterised in that the light source (9; 19, 24) is screened on all sides with the exception of an elongated light outlet slit (16).

## Revendications

1. Dispositif de détection par une technique de mesure des oscillations de la charge dans des grues, comprenant une source (9) lumineuse et une caméra (8) qui sont disposées de part et d'autre d'un plan (10) d'oscillation d'un câble (4) de grue et un dispositif (21) d'exploitation qui détermine un angle (α) instantané d'oscillation en fonction d'une distance verticale entre la caméra (8) et la suspension du câble et d'un signal de la caméra (8), caractérisé en ce que la source (9) lumineuse s'étend en longueur, en ce que la caméra comporte une ligne (11) de capteurs d'image et en ce que cette ligne (11) de capteurs d'image et la source (9) lumineuse qui s'étend en longueur sont dirigées horizontalement et parallèlement au plan (10) d'oscillation.

2. Dispositif suivant la revendication 1,
caractérisé
en ce qu'il est disposé horizontalement, de part et d'autre du câble (4) de grue et sensiblement perpendiculairement à son plan (6) d'oscillation, une deuxième caméra (18) à ligne ayant une ligne (20) horizontale de capteurs d'image et une deuxième source (19) lumineuse s'étendant en longueur et en ce que le signal de sortie de la deuxième caméra (18) à ligne est envoyé au dispositif (21) d'exploitation pour relever la distance (y₀) du plan (10) d'oscillation du câble (4) de grue à la première caméra (8) à ligne et pour corriger l'angle (α) d'oscillation déterminé.

3. Dispositif suivant la revendication 1,
caractérisé
en ce qu'il est prévu du côté de la source (9) lumineuse une deuxième caméra (22) à ligne (23) de capteurs d'image horizontale et du côté de la première caméra (8) à ligne une deuxième source (24) lumineuse dirigée horizontalement et s'étendant en longueur et en ce que les signaux des deux caméras (8, 22) à ligne sont envoyés au dispositif (21) d'exploitation pour la compensation mutuelle de l'influence de la distance du plan (10) d'oscillation aux deux caméras (8, 22) à ligne sur le résultat de la mesure de l'angle d'oscillation.

4. Dispositif suivant la revendication 2 ou 3,
caractérisé
en ce que le dispositif (21) d'exploitation est constitué de manière à déterminer des oscillations de la charge transversalement au plan (10) d'oscillation sur la base du signal de la deuxième caméra (18, 22).

5. Dispositif suivant l'une des revendications précédentes,
caractérisé
en ce que la caméra (8 ; 18, 22) à ligne et la source (9 ; 19, 24) lumineuse sont disposées sur une embase (7) commune qui a, dans la région comprise entre la caméra (8 ; 18, 22) à ligne et la source (9 ; 19, 24) lumineuse, un évidement (12) de réception du câble (4) de la grue.

6. Dispositif suivant l'une des revendications précédentes,
caractérisé
en ce que la source (9 ; 19, 24) lumineuse est constituée d'un tube luminescent.

7. Dispositif suivant l'une des revendications précédentes,
caractérisé
en ce que la source (9 ; 19, 24) lumineuse est protégée de tous les côtés, à l'exception d'une fente (16) de sortie de la lumière qui s'étend en longueur.
